# EUROPEAN PATENT APPLICATION

(11) **EP 4 333 219 A1**
(43) Date of publication of application: **06.03.2024**
(21) Application number: 23166122.4
(22) Date of filing: 31.03.2023
(51) Int. Cl.: H01R 13/631, H01R 24/38, H01R 25/00, H01R 31/06

(54) **ELECTRICAL CONNECTOR AND BASE**

(30) Priority: 31.08.2022 TW 111133049
(71) Applicant: Energy Full Electronics Co., Ltd., New Taipei City, Taiwan 23145 (TW)
(72) Inventor: CHIN, Hsu-Shen, 23145 New Taipei City (TW)
(74) Representative: V.O.

(57) **Abstract**

An electrical connector is disclosed. The electrical connector includes an upper insulating shell, a lower insulating shell, a first-polarity conductive terminal, a second-polarity conductive terminal, a third-polarity conductive terminal, a central conductor, a first outer conductor, and a second outer conductor. The first outer conductor is coupled to the third connecting portion of the third-polarity conductive terminal. The second outer conductor is coupled to the second connecting portion of the second-polarity conductive terminal. The first outer contact portion of the first outer conductor, the central contact portion of the central conductor and the second outer contact portion of the second outer conductor are sequentially arranged outside the lower insulating shell.

## Description

### FIELD OF THE DISCLOSURE

The present disclosure relates to an electrical connector and its base, and more particularly, to an electrical connector and its base that can realize non-directional docking.

### BACKGROUND

As the market demand for cables is getting higher and higher, the specifications of the matching connectors are more stringent, and more and more attention is paid to the connector components of different interfaces. The structure of the contact interface determines the electrical and mechanical properties of the connector, such as resistance value, mating force and durability. However, usually in a connector assembly, the connector and its base are connected in a specific direction, and the user can only assemble according to the set direction.

If the connector is incorrectly assembled, the pins of the connector will be damaged, and the electronic equipment will be reimbursed in severe cases. Therefore, in order to avoid the occurrence of unexpected situations, which results in the malfunction of the connector assembly and in order to allow designers to design the circuit layout without limitations, a connector assembly where the connector and its base has no specific assembly direction is needed.

### SUMMARY

One objective of an embodiment of the present disclosure is to provide an electrical connector and its base that have no specific assembly direction, to solve the above-mentioned issue.

According to an embodiment of the present disclosure, an electrical connector is disclosed. The electrical connector comprises: an upper insulating shell, provided with at least one socket; a lower insulating shell, arranged under the upper insulating shell and connected with the upper insulating shell; a first-polarity conductive terminal, provided with a first elastic piece portion and a first connecting portion, wherein the first elastic piece portion is correspondingly arranged with a socket of the upper insulating shell; a second-polarity conductive terminal, provided with a second elastic piece portion and a second connecting portion, wherein the second elastic piece portion is correspondingly arranged with a socket of the upper insulating shell; a third-polarity conductive terminal, provided with a third elastic piece portion and a third connecting portion, wherein the third elastic piece portion is correspondingly arranged with an insertion hole of the upper insulating shell; a central conductor, coupled to the first connecting portion of the first polarity conductive terminal, having a central fixing portion and a central contact portion, wherein the central fixing portion allows the central conductor to be fixed to the lower insulating shell; a first outer conductor, coupled to the third connecting portion of the third-polarity conductive terminal, having a first outer fixing portion and a first outer contact portion, wherein the first outer fixing portion allows the first outer conductor to be fixed to the lower insulating shell; and a second outer conductor, coupled to the second connecting portion of the second-polarity conductive terminal, having a second outer fixing portion and a second outer contact portion, wherein the second outer fixing portion allows the second outer conductor to be fixed to the lower insulating shell; wherein the first outer contact portion of the first outer conductor, the central contact portion of the central conductor and the second outer contact portion of the second outer conductor are sequentially arranged outside the lower insulating shell.

According to an embodiment of the present disclosure, a base is disclosed. The base comprises: a first insulating shell, provided with at least one socket; a second insulating shell, arranged under the first insulating shell, and connected with the first insulating shell; a central terminal, provided with a central docking portion and a central connecting portion, wherein the central docking portion is disposed correspondingly to a socket of the first insulating shell, and the central connecting portion allows the central terminal to be fixed between the first insulating shell and the second insulating shell; a first outer ring terminal, provided with a first outer ring docking portion and a first outer ring connecting portion, wherein the first outer ring docking portion is arranged correspondingly to a socket of the first insulating shell, and the first outer ring connecting portion allows the first outer ring terminal to be fixed between the first insulating shell and the second insulating shell; a first inner ring terminal, provided with a first inner ring docking portion and a first inner ring connecting portion, wherein the first inner ring docking portion is arranged correspondingly to a socket of the first insulating shell, and the first inner ring connecting portion allows the first inner ring terminal to be fixed between the first insulating shell and the second insulating shell; a second outer ring terminal, provided with a second outer ring docking portion and a second outer ring connecting portion, wherein the second outer ring docking portion is arranged correspondingly to a socket of the first insulating shell, and the second outer ring connecting portion allows the second outer ring terminal to be fixed between the first insulating shell and the second insulating shell; and a second inner ring terminal, provided with a second inner ring docking portion and a second inner ring connecting portion, wherein the second inner ring docking portion is arranged correspondingly to a socket of the first insulating shell, and the second inner ring connecting portion allows the second inner ring terminal to be fixed between the first insulating shell and the second insulating shell; wherein the first outer ring docking portion of the first outer ring terminal and the first inner ring docking portion of the first inner ring terminal are disposed correspondingly to a same socket, and the second outer ring docking portion of the second outer ring terminal and the second inner ring docking portion of the second inner ring terminal are disposed correspondingly to a same socket.

To sum up, in the electrical connector and its base provided by the present disclosure, the structural design of the contact interface does not have a specific assembly direction, so as to realize non-directional docking and save the cost of the foolproof structure. Furthermore, the designer could have a better flexibility in the circuit layout. In addition, its structural design makes the connector components have polarities, and the number of components conducting between the electrical connector and its base is also different depending on their docking angle. This raises its applicability.

These and other features, aspects and advantages of the present disclosure will become understood with reference to the following description, appended claims and accompanying figures.

### BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may still derive other drawings from these accompanying drawings without creative efforts.
Fig. 1 is a diagram of an electrical connector according to a first embodiment of the present disclosure.
Fig. 2 is a diagram of the electrical connector without the upper insulating shell according to the first embodiment of the present disclosure.
Fig. 3 is a cross-sectional diagram of an electrical connector according to a second embodiment of the present disclosure.
Fig. 4 is a bottom view of the electrical connector according to the second embodiment of the present disclosure.
Fig. 5 is a diagram of a base according to an embodiment of the present disclosure.
Fig. 6A is an exploded diagram of the base shown in Fig. 5.
Fig. 6B is an exploded diagram of the base shown Fig. 5 from another view angle.
Fig. 7 is a diagram depicting the electrical connector and its base assembled at a first angle according to an embodiment of the present disclosure.
Fig. 8 is a cross-sectional view taken along the line A-A' of Fig. 7.
Fig. 9 is diagram depicting the electrical connector and its base assembled at a second angle according to an embodiment of the present disclosure.
Fig. 10 is a cross-sectional view taken along the line B-B' of Fig. 9.
Fig. 11 is a top view of sockets of various specifications applicable to the electrical connector of each embodiment of the present disclosure.

### DETAILED DESCRIPTION

In order to facilitate understanding the technical features, content and advantages of the invention and the efficacy it can achieve, the present disclosure is hereby combined with the accompanying drawings, and the expression of the embodiment is described in detail as follows, and the scheme used therein, the main purpose of which is only for illustrative and auxiliary explanation purposes, may not be the true proportion and precise configuration of the embodiment of the present disclosure, so the proportion and configuration relationship of the attached drawing should not be interpreted, limiting the scope of rights of the invention in the actual implementation.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

The following will refer to the relevant drawings, illustrating various embodiments of the electrical connector and base according to the present disclosure, for ease of understanding, the same components in the following embodiments are illustrated by the same symbols.

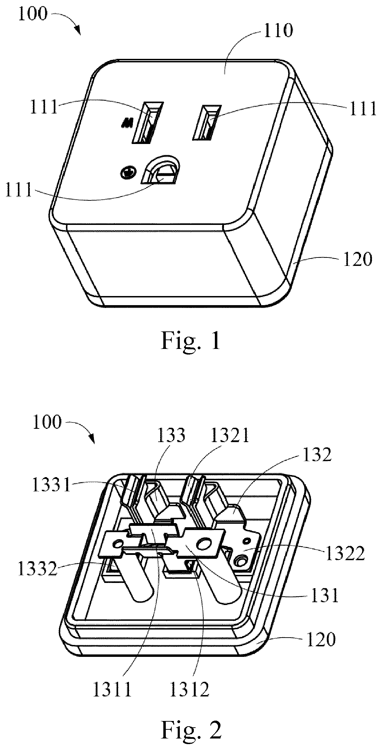

Please refer to Fig. 1 and Fig. 2. Fig. 1 is a diagram of an electrical connector according to a first embodiment of the present disclosure. Fig. 2 is a diagram of the electrical connector without the upper insulating shell according to the first embodiment of the present disclosure. The electrical connector 100 includes an upper insulating shell 110, a lower insulating shell 120, a terminal member, and a conductor member. The upper insulating shell 110 is provided with at least one socket 111 for connecting with other electronic devices. The lower insulating shell 120 is disposed under the upper insulating shell 110 and is connected with the upper insulating shell 110 to form a cavity for accommodating the terminal member and the conductor member.

As shown in Fig. 1, the upper insulating shell 110 is provided with three sockets 111, and the electrical connector 100 is an outlet. However, the shape and quantity of the sockets are not limited here. In some embodiments, the number of the sockets 111 can be one or two, and the shape can be square or circular as long as the number and the shape meet users' demands. In this embodiment, the electrical connector 100 is a three-dimensional block-shaped socket that can be movably assembled, but it is not limited thereto. In other embodiments, the electrical connector 100 can be arranged in an electronic device or used with a connecting wire.

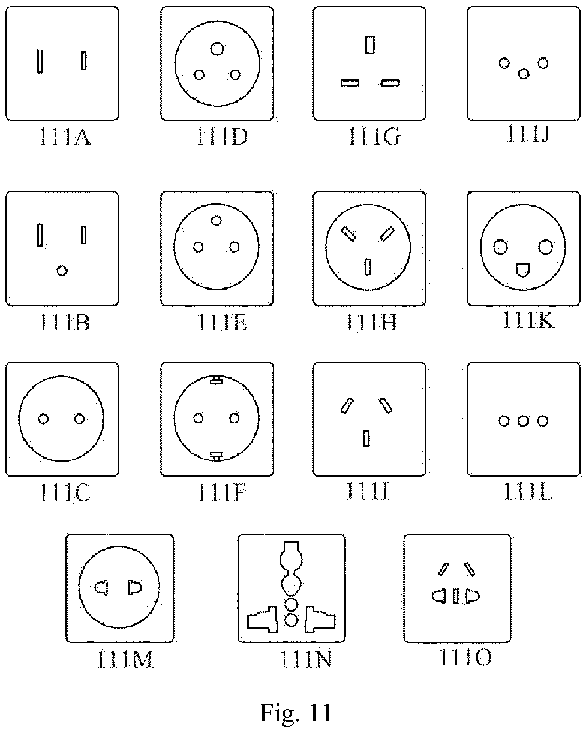

Please refer to Fig. 11. Fig. 11 is a top view of sockets 111 of various specifications applicable to the electrical connector 100. The electronic device can insert its plug into the socket 111 to obtain the power supply. As shown in Fig. 11, the socket 111 can be a power socket of 100~120V or 200~240V of the general utility power. The socket 111 can be a power socket of different specifications, such as Type A power socket 111A, type B power socket 111B, type C power socket 111C, type D power socket 111D, type E power socket 111E, type F power socket 111F, type G power socket 111G, type H power socket 111H, type I power socket Hole 1111, type J power socket 111J, type K power socket 111K, type L power socket 111CL and other power sockets of different specifications, or universal power sockets, such as Type A and Type C universal socket 111M, multinational universal sockets 111N and 111O, etc.

In addition, the socket 111 can also be a Universal Serial Bus (USB) socket 111, which is used to supply power to electronic devices having the USB2. 0, USB 2.0 Standard A, USB 2.0 Type C, USB3.0 and USB3.1, etc.

The terminal member is disposed between the upper insulating shell 110 and the lower insulating shell 120. The terminal member includes a first-polarity conductive terminal 131, a second-polarity conductive terminal 132 and a third-polarity conductive terminal 133. As shown in Fig. 2, the arrangement of the internal terminal members in the electrical connector 100 can be clearly seen with the upper insulating shell 110 removed. Please refer to Fig. 1 and Fig. 2. The first-polarity conductive terminal 131 is provided with a first elastic piece portion 1311 and a first connecting portion 1312. The second-polarity conductive terminal 132 is provided with a second elastic piece portion 1321 and a second connecting portion 1322, and the second elastic piece portion 1321 is disposed correspondingly to a socket 111 of the upper insulating shell 110. The third-polarity conductive terminal 133 is provided with a third elastic piece portion 1331 and a third connecting portion 1332, and the third elastic piece portion 1331 is disposed correspondingly to a socket 111 of the upper insulating shell 110.

Specifically, the structure and quantity of the terminal members and the manner in which they are fixed between the upper insulating shell 110 and the lower insulating shell 120 are not limited here. In this embodiment, when the electrical connector 100 is docked with other electronic devices, the pins of the electronic device pass through the sockets 111 of the upper insulating shell 110 and electrically connect with the first elastic piece portion 1311 of the first-polarity conductive terminals 131, the second elastic piece portion 1321 of the second-polarity conductive terminal 132 and the third elastic piece portion 1331 of the third-polarity conductive terminal 133 in the terminal member.

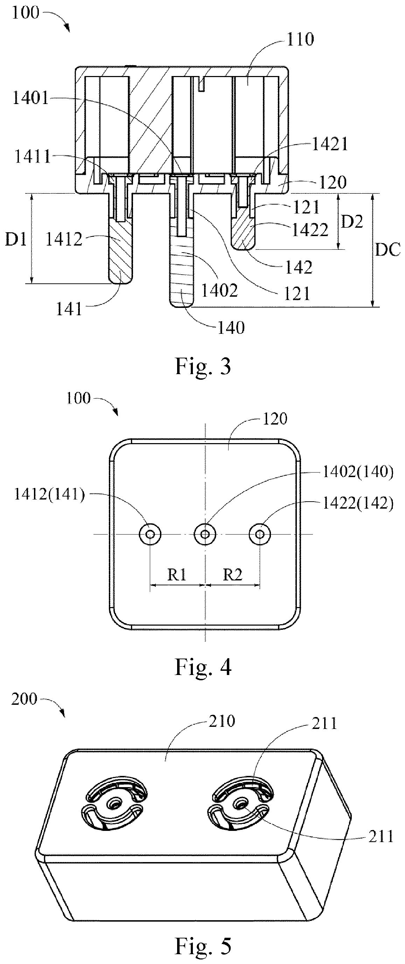

Please refer to Fig. 3 and Fig. 4. Fig. 3 is a cross-sectional diagram of an electrical connector according to a second embodiment of the present disclosure. Fig. 4 is a bottom view of the electrical connector according to the second embodiment of the present disclosure. As shown in Fig. 3, the conductor member passes through the lower insulating shell 120 and includes a central conductor 140, a first outer conductor 141 and a second outer conductor 142. In the electrical connector 100, the central conductor 140 is coupled to the first connecting portion 1312 of the first-polarity conductive terminal 131. The central conductor 140 is provided with a central fixing portion 1401 and a central contact portion 1402. The central fixing portion 1401 fixes the central conductor 140 to the lower portion Insulating shell 120. The first outer conductor 141 is coupled to the third connecting portion 1332 of the third-polarity conductive terminal 133. The first outer conductor 141 is provided with a first outer fixing portion 1411 and a first outer contact portion 1412. The first outer fixing portion 1411 allows the first outer conductor 141 to be fixed to the lower insulating shell 120. The second outer conductor 142 is coupled to the second connecting portion 1322 of the second-polarity conductive terminal 132 and is provided with a second outer fixing portion 1421 and a second outer contact portion 1422. The second outer fixing portion 1421 allows the second outer conductor 142 to be fixed to the lower insulating shell 120. The manner in which the conductor member penetrates through the lower insulating shell 120 is not limited herein.

In the above-mentioned embodiment, the terminal member and the conductor member can be coupled to each other by direct contact, screw-locking contact or welding. However, in other embodiments, the terminal member and the conductor member may be integrally formed, disposed between the upper insulating shell 110 and the lower insulating shell 120, and passing through the lower insulating shell 120.

Please refer to Fig. 3, the first outer contact portion 1412 of the first outer conductor 141, the central contact portion 1402 of the central conductor 140, and the second outer contact portion 1422 of the second outer conductor 142 are sequentially disposed outside the lower insulating shell along the same straight line. The center of the first outer conductor 141, the center of the central conductor 140 and the center of the second outer conductor 142 may be aligned in a straight line, but not limited thereto. In some embodiments, the center of the first outer conductor 141, the center of the central conductor 140 and the center of the second outer conductor 142 may be not aligned in the same straight line.

In this embodiment, the length DC of the central contact portion 1402 of the central conductor 140 exposed to the lower insulating shell 120 is greater than the length D1 of the first outer contact portion 1412 of the first outer conductor 141 exposed to the lower insulating shell 120. The length D1 of the first outer contact portion 1412 of the first conductor 141 exposed to the lower insulating shell 120 is greater than the length D2 of the second outer contact portion 1422 of the second outer conductor 142 exposed to the lower insulating shell 120.

As shown in Fig. 3, the difference between the first embodiment and the second embodiment is that the lower insulating shell 120 of the electrical connector 100 of the second embodiment is provided with extension portions 121, which partially covers the central contact portion 1402 of the central conductor 140, the first outer contact portion 1412 of the first outer conductor 141 and the second outer contact portion 1422 of the second outer conductor 142. The arrangement of the extension portion 121 can form an insulating shield when the electrical connector 100 is assembled with other electronic devices, so that the electrical connector 100 can maintain a certain transmission performance. Here, the number and shape of the extension portions 121 are not limited, and the number and the shape can be adjusted according to the specifications of the conductor member.

As shown in Fig. 4, in this embodiment, the distance R1 between the first outer contact portion 1412 of the first outer conductor 141 and the central contact portion 1402 of the central conductor 140 is equal to the distance R2 between the central contact portion 1402 of the central conductor 140 and the second outer contact portion 1422 of the second outer conductor 142. In the electrical connector 100, the center of the first outer conductor 141, the center of the central conductor 140 and the center of the second outer conductor 142 are aligned in the same straight line.

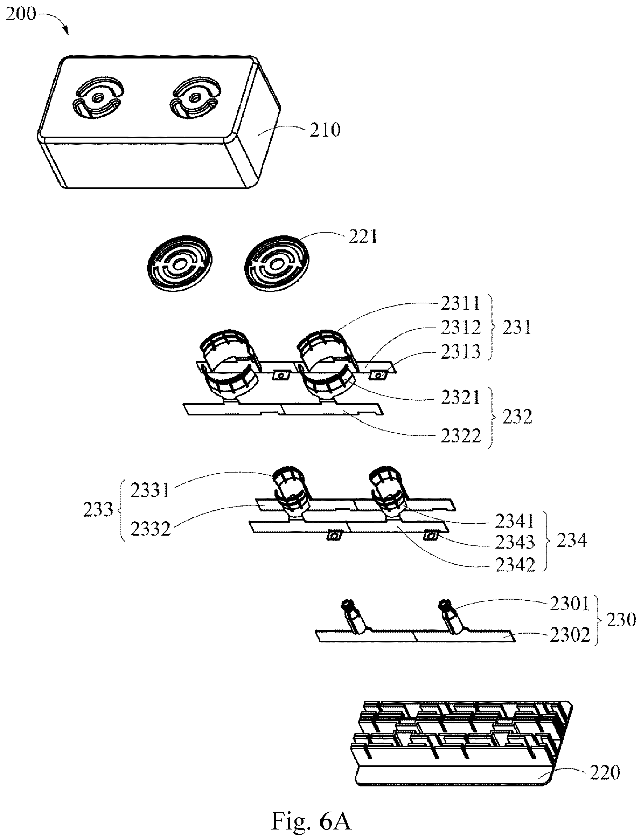

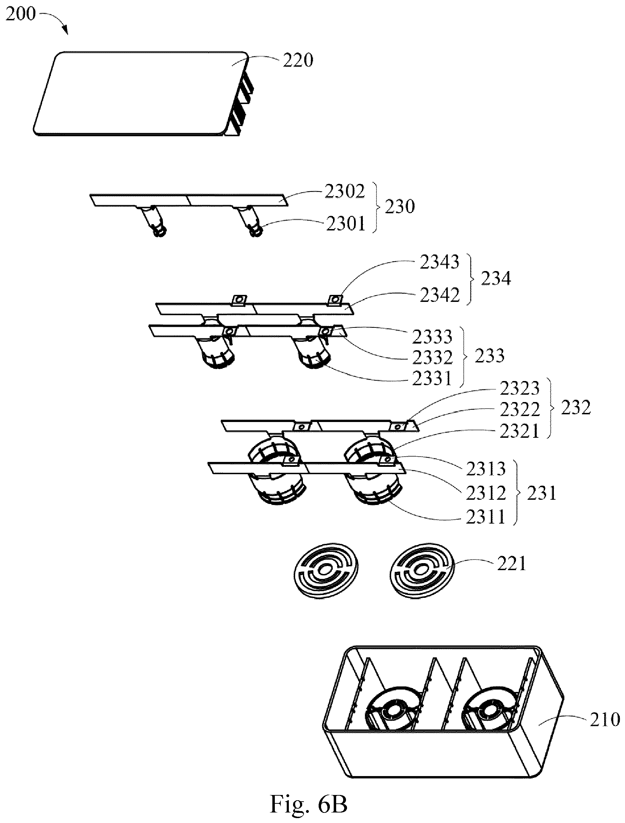

Please refer to Figs. 5, 6A and 6B. Fig. 5 is a diagram of a base according to an embodiment of the present disclosure. Fig. 6A is an exploded diagram of the base shown in Fig. 5. Fig. 6B is an exploded diagram of the base shown Fig. 5 from another view angle. The base 200 includes a first insulating shell 210, a second insulating shell 220 and a terminal member. The first insulating shell 210 is provided with at least one socket 211. The second insulating shell 220 is disposed under the first insulating shell 210 and is connected with the first insulating shell 210 to form a cavity for accommodating the terminal member. In the two embodiments, the base 200 is provided with two sets of sockets 211, but the number of sets of sockets 211 and the arrangement of each set of sockets 211 on the base 200 are not limited.

It can be seen from Figs. 6A and 6B, the terminal member is disposed between the first insulating shell 210 and the second insulating shell 220. The terminal member includes a central terminal 230, a first outer ring terminal 231, a first inner ring terminal 233, and a second outer ring terminal 232 and the second inner ring terminal 234. The central terminal 230 is provided with a central docking portion 2301 and a central connecting portion 2302. The central docking portion 2301 is disposed correspondingly to a socket 211 of the first insulating shell 210. The central connecting portion 2302 allows the central terminal to be fixed between the first insulating shell 210 and the second insulating shell 220. The first outer ring terminal 231 is provided with a first outer ring docking portion 2311 and a first outer ring connecting portion 2312. The first outer ring docking portion 2311 is disposed correspondingly to a socket 211 of the first insulating shell 210. The first outer ring connecting portion 2312 allows the first outer ring terminal 231 to be fixed between the first insulating shell 210 and the second insulating shell 220. The first inner ring terminal 233 is provided with a first inner ring docking portion 2331 and a first inner ring connecting portion 2332. The first inner ring docking portion 2331 is disposed correspondingly to a socket 211 of the first insulating shell 210. The first inner ring connecting portion 2332 allows the first inner ring terminal 233 to be fixed between the first insulating shell 210 and the second insulating shell 220. The second outer ring terminal 232 is provided with a second outer ring docking portion 2321 and a second outer ring connecting portion 2322. The second outer ring docking portion 2321 is disposed corresponding to a socket 211 of the first insulating shell 210. The second outer ring connecting portion 2322 allows the second outer ring terminal 232 to be fixed between the first insulating shell 210 and the second insulating shell 220. The second inner ring terminal 234 is provided with a second inner ring docking portion 2341 and a second inner ring connecting portion 2342. The second inner ring docking portion 2341 is disposed corresponding to a socket 211 of the first insulating shell 210, and the second inner ring connecting portion 2342 allows the second inner ring terminal 234 to be fixed between the first insulating shell 210 and the second insulating shell 220. The first outer ring connecting portion 2312 of the first outer ring terminal 231 is provided with a first outer ring welding portion 2313, or the first inner ring connecting portion 2332 of the first inner ring terminal 233 is provided with a first inner ring welding portion 2333. The second outer ring connecting portion 2322 of the second outer ring terminal 232 is provided with a second outer ring welding portion 2323, or the second inner ring connecting 2342 of the second inner ring terminal 234 is provided with a second inner ring welding portion 2343.

The first outer ring docking portion 2311 of the first outer ring terminal 231 and the first inner ring docking portion 2331 of the first inner ring terminal 233 are disposed correspondingly to the same socket 211. The second outer ring docking portion 2321 of the second outer ring terminal 232 and the second inner ring docking portion 2341 of the second inner ring terminal 234 are arranged correspondingly to the same socket 211. In the two embodiments, the specifications of the terminal member and the manner of being disposed between the first insulating shell 210 and the second insulating shell 220 are not limited here.

In contrast to the previous embodiment, the base 200 of this embodiment is provided with spacers 221 between the first insulating shell 210 and the second insulating shell 220. Due to the arrangement of the spacers 221, the first outer ring terminal 231, the first inner ring terminal 233, the second outer ring terminal 232 and the second inner ring terminal 234 have a certain distance in-between. The terminal docking portions is more difficult to introduce deformations and thus the life could be prolonged.

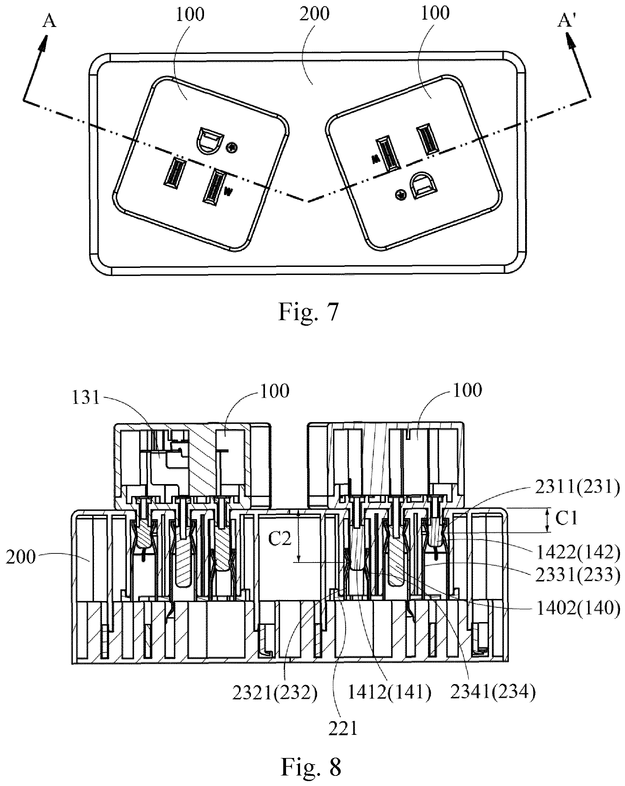

The present disclosure also discloses an electrical connector assembly including the aforementioned electrical connector 100 and the base 200. Please refer to Figs. 7 and 8. Fig. 7 is a diagram depicting the electrical connector and its base assembled at a first angle according to an embodiment of the present disclosure. Fig. 8 is a cross-sectional view taken along the line A-A' of Fig. 7. As shown in Fig. 8, the distance C1 between the first outer ring docking portion 2311 of the first outer ring terminal 231/the first inner ring docking portion 2331 of the first inner ring terminal 233 and the upper surface of the first insulating shell 210 is smaller than the distance C2 between the second outer ring docking portion 2321 of the second outer ring terminal 232/the second inner ring docking portion 2341 of the second inner ring 234 terminal and the upper surface of the first insulating shell 210.

Please refer to Figs. 7 and 8. When the electrical connector 100 and the base 200 are assembled at the first angle, the central contact portion 1402 of the central conductor 140 passes through a socket 211 of the first insulating shell 210 to be coupled to the central docking portion of the central terminal 230, the second outer contact portion 1422 of the second outer conductor 142 passes through a socket 211 of the first insulating shell 210 to be coupled to the first outer ring docking portion 2311 of the first outer ring terminal 231 and the first inner ring docking portion 2331 of a first inner ring terminal 233, and the first outer contact portion 1412 of the first outer conductor 141 passes through a socket 211 of the first insulating shell 210 to be coupled to the second outer ring docking portion 2321 of the second outer ring terminal 232 and the second inner ring docking portion 2341 of the second inner ring terminal 234.

In the electrical connector 100, the distance R1 between the first outer contact portion 1412 of the first outer conductor 141 and the central contact portion 1402 of the central conductor 140 is equal to the distance R2 between the central contact portion 1402 of the central conductor 140 and the second outer contact portions 1422 of the second outer conductor 142, and the center of the first outer conductor 141, the center of the central conductor 140, and the center of the second outer conductor 142 are aligned in the same straight line. Therefore, when the electrical connector 100 is assembled with the base 200, if the socket 211 to which the central terminal 230 is docked is regarded as the center of a circle, the sockets 211 corresponding to other terminal members of the base 200 have the same shape of the trajectories of the rotation of the first outer conductor 141 and the second outer conductor 142 of the electrical connector 100. That is, non-directional docking can be achieved between the electrical connector 100 and the base 200.

By means of the structural design between the conductor members of the electrical connector 100 and the base 200, the electrical connector 100 can be assembled as long as the central conductor 140 of the electrical connector 100 is aligned with the socket 211 corresponding to the central terminal 230 of the base 200. It is convenient for users to install and use, so the manufacturer can save the cost caused by providing the foolproof structure, and the designer can have more flexibility to design the circuit layout.

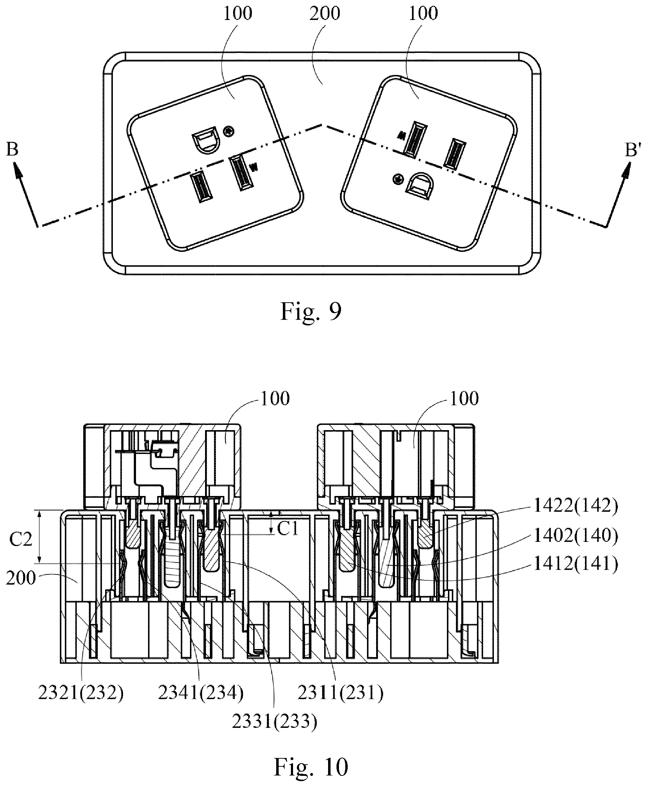

Please refer to Figs. 9 and 10. Fig. 9 is diagram depicting the electrical connector and its base assembled at a second angle according to an embodiment of the present disclosure. Fig. 10 is a cross-sectional view taken along the line B-B' of Fig. 9. When the electrical connector 100 and the base 200 are assembled at the second angle, the central contact portion 1402 of the central conductor 140 passes through a socket 211 of the first insulating shell 210 to be coupled to the central docking portion 2301 of the central terminal 230, the second outer contact portion 1422 of the second outer conductor 142 passes through a socket 211 of the first insulating shell 210 but is not coupled to the second outer ring docking portion 2321 of the second outer ring terminal 232 and the second inner docking portion 2341 of the second inner ring terminal 234, and the first outer contact portion 1412 of the first outer conductor 141 passes through a socket 211 of the first insulating shell 210 to be coupled to the first outer ring docking portion 2311 of the first outer ring terminal 231 and the first inner ring docking portion 2331 of the first inner ring terminal 233.

Due to the difference in the lengths of the conductor members of the electrical connector 100 and the different distances between the terminal members disposed inside the base 200 and the upper surface of the base 200, when the electrical connector 100 is docked with the base 200 at the second angle, the first outer conductor 141 passes through a socket 211 of the first insulating shell 210 and to be coupled to the first outer ring terminal 231 and the first inner ring terminal 233. The first outer conductor 141 passes through another socket 211 of the first insulating shell 210 but is not coupled to the second outer ring terminal 232 and the second inner ring terminal 234. In more detail, the structural design disclosed in the present disclosure enables polarity between the electrical connector 100 and its base 200, and the second angle refers to an incomplete conduction between the conductor member of the electrical connector 100 and the terminal member of the base 200. The difference between the first angle and the second angle lies in the difference in the number of conductive members after docking the electrical connector 100 with the base 200. Taking the embodiment shown in Figs. 9 and 10 as an example, because the distance C1 between the first outer ring docking portion 2311 of the first outer ring terminal 231/ the first inner ring docking portion 2331 of the first inner ring terminal 233 and the upper surface of the first insulating shell 210 is smaller than the distance C2 between the second outer ring docking portion 2321 of the second outer ring terminal 232/the second inner docking portion 2341 of the second inner ring terminal 234 and the upper surface of the first insulating shell 210, the second outer conductor 142 is not coupled to the second outer ring terminal 232 and the second inner ring terminal 234. In this way, although the second outer conductor 142 directly contacts the second outer ring terminal 232, the electronic device is not coupled to the base 200 when the pins of the electronic device is inserted into the socket 111 of the electrical connector corresponding to the second-polarity conductive terminal 132. This structure design could be equipped with power-saving function or indicator lights in the electronic device, so that the circuit layout could be used in more applications due to the difference in the number of conductive components after plugging when the non-directional docking is achieved.

To sum up, in the electrical connector 100 and its base 200 provided by the present disclosure, the structural design of the contact interface does not have a specific assembly direction, so as to realize non-directional docking and save the cost of the foolproof structure. Furthermore, the designer could have a better flexibility in the circuit layout. In addition, its structural design makes the connector components have polarities, and the number of components conducting between the electrical connector and its base is also different depending on their docking angle. This raises its applicability.

Above are embodiments of the present disclosure, which does not limit the scope of the present disclosure. Any modifications, equivalent replacements or improvements within the spirit and principles of the embodiment described above should be covered by the protected scope of the disclosure.

## Claims

1. An electrical connector (100), **characterized in that** the electrical connector (100) comprises:
an upper insulating shell (110), provided with at least one socket (111);
a lower insulating shell (120), arranged under the upper insulating shell (110) and connected with the upper insulating shell (110);
a first-polarity conductive terminal (131), provided with a first elastic piece portion (1311) and a first connecting portion (1312), wherein the first elastic piece portion (1311) is correspondingly arranged with a socket (111) of the upper insulating shell (110);
a second-polarity conductive terminal (132), provided with a second elastic piece portion (1321) and a second connecting portion (1322), wherein the second elastic piece portion (1321) is correspondingly arranged with a socket (111) of the upper insulating shell (110);
a third-polarity conductive terminal (133), provided with a third elastic piece portion (1331) and a third connecting portion (1332), wherein the third elastic piece portion (1331) is correspondingly arranged with an insertion hole of the upper insulating shell (110);
a central conductor (140), coupled to the first connecting portion (1312) of the first-polarity conductive terminal (131), having a central fixing portion (1401) and a central contact portion (1402), wherein the central fixing portion (1401) allows the central conductor (140) to be fixed to the lower insulating shell (120);
a first outer conductor (141), coupled to the third connecting portion (1332) of the third-polarity conductive terminal (133), having a first outer fixing portion (1411) and a first outer contact portion (1412), wherein the first outer fixing portion (1411) allows the first outer conductor (141) to be fixed to the lower insulating shell (120); and
a second outer conductor (142), coupled to the second connecting portion (1322) of the second-polarity conductive terminal (132), having a second outer fixing portion (1421) and a second outer contact portion (1422), wherein the second outer fixing portion (1421) allows the second outer conductor (142) to be fixed to the lower insulating shell (120);
wherein the first outer contact portion (1412) of the first outer conductor (141), the central contact portion of the central conductor (140) and the second outer contact portion (1422) of the second outer conductor (142) are sequentially arranged outside the lower insulating shell (120).

2. The electrical connector of claim 1, wherein a distance between the first outer contact portion (1412) of the first outer conductor (141) and the central contact portion (1402) of the central conductor (140) is equal to a distance between the central contact portion (1402) of the central conductor (140) and the second outer contact portion (1422) of the second outer conductor (142).

3. The electrical connector of claim 1 , wherein a length of the central contact portion (1402) of the central conductor (140) exposed to the lower insulating shell (120) is greater than a length of the first outer contact portion (1412) of the first outer conductor (141) exposed to the lower insulating shell (120); and a length of the first outer contact portion (1412) of the first outer conductor (141) exposed to the lower insulating shell (120) is greater than a length of the second outer contact portion (1422) of the second outer conductor (142) exposed to the lower insulating shell (120).

4. The electrical connector of claim 1, wherein the first outer contact portion (1412) of the first outer conductor (141), the central contact portion (1402) of the central conductor (140) and the second outer contact portion (1422) of the second outer conductor (142) are sequentially arranged outside of the lower insulating shell (120) along a same straight line.

5. The electrical connector of claim 1, wherein the lower insulating shell (120) comprises at least one extending portion partially covering the central contact portion (1402) of the central conductor (140), the first outer contact of the first outer conductor (141) or the second outer contact portion (1422) of the second outer conductor (142).

6. A base (200) **characterized in that** the base (200) comprises:
a first insulating shell (210), provided with at least one socket (211);
a second insulating shell (220), arranged under the first insulating shell (210), and connected with the first insulating shell (210);
a central terminal (230), provided with a central docking portion (2301) and a central connecting portion (2302), wherein the central docking portion (2301) is disposed correspondingly to a socket (211) of the first insulating shell (210), and the central connecting portion (2302) allows the central terminal (230) to be fixed between the first insulating shell (210) and the second insulating shell (220);
a first outer ring terminal (231), provided with a first outer ring docking portion (2311) and a first outer ring connecting portion (2312), wherein the first outer ring docking portion (2311) is arranged correspondingly to a socket (211) of the first insulating shell (210), and the first outer ring connecting portion (2312) allows the first outer ring terminal (231) to be fixed between the first insulating shell (210) and the second insulating shell (220);
a first inner ring terminal (233), provided with a first inner ring docking portion (2331) and a first inner ring connecting portion (2332), wherein the first inner ring docking portion (2331) is arranged correspondingly to a socket (211) of the first insulating shell (210), and the first inner ring connecting portion (2332) allows the first inner ring terminal (233) to be fixed between the first insulating shell (210) and the second insulating shell (220);
a second outer ring terminal (232), provided with a second outer ring docking portion (2321) and a second outer ring connecting portion (2322), wherein the second outer ring docking portion (2321) is arranged correspondingly to a socket (211) of the first insulating shell (210), and the second outer ring connecting portion (2322) allows the second outer ring terminal (232) to be fixed between the first insulating shell (210) and the second insulating shell (220); and
a second inner ring terminal (234), provided with a second inner ring docking portion (2341) and a second inner ring connecting portion (2342), wherein the second inner ring docking portion (2341) is arranged correspondingly to a socket (211) of the first insulating shell (210), and the second inner ring connecting portion (2342) allows the second inner ring terminal (234) to be fixed between the first insulating shell (210) and the second insulating shell (220);
wherein the first outer ring docking portion (2311) of the first outer ring terminal (231) and the first inner ring docking portion (2331) of the first inner ring terminal (233) are disposed correspondingly to a same socket (211), and the second outer ring docking portion (2321) of the second outer ring terminal (232) and the second inner ring docking portion (2341) of the second inner ring terminal (234) are disposed correspondingly to a same socket (211).

7. The base of claim 6, wherein a distance between the first outer ring docking portion (2311) of the first outer ring terminal (231) or the first inner ring docking portion (2331) of the first inner ring terminal (233) and an upper surface of the first insulating shell (210) is smaller than a distance between the second outer ring docking portion (2321) of the second outer ring terminal (232) or the second inner ring docking portion (2341) of the second inner ring terminal (234) and the upper surface of the first insulating shell (210).

8. The base of claim 6, further comprising:
a spacer (221) spaced between the first insulating shell (210) and the second insulating shell (220).

9. The base of claim 6, wherein the first outer ring connecting portion (2312) of the first outer ring terminal (231) is provided with a first outer ring welding portion (2313), or the first inner ring connecting portion (2332) of the first inner ring terminal (233) is provided with a first inner ring welding portion (2333).

10. The base of claim 6, wherein the second outer ring connecting portion (2322) of the second outer ring terminal (232) is provided with a second outer ring welding portion (2323), or the second inner ring connecting portion (2342) of the second inner ring terminal (234) is provided with a second inner ring welding portion (2343).

11. An electrical connector and a base assembly, **characterized in that**:
an electrical connector (100) comprising:
an upper insulating shell (110), provided with at least one socket (111);
a lower insulating shell (120), arranged under the upper insulating shell and connected with the upper insulating shell (110);
a first-polarity conductive terminal (131), provided with a first elastic piece portion (1311) and a first connecting portion (1312), wherein the first elastic piece portion (1311) is correspondingly arranged with a socket (111) of the upper insulating shell;
a second-polarity conductive terminal (132), provided with a second elastic piece portion (1321) and a second connecting portion (1322), wherein the second elastic piece portion (1321) is correspondingly arranged with a socket (111) of the upper insulating shell;
a third-polarity conductive terminal (133), provided with a third elastic piece portion (1331) and a third connecting portion (1332), wherein the third elastic piece portion (1331) is correspondingly arranged with an insertion hole of the upper insulating shell;
a central conductor (140), coupled to the first connecting portion (1312) of the first polarity conductive terminal, having a central fixing portion (1401) and a central contact portion (1402), wherein the central fixing portion (1401) allows the central conductor (140) to be fixed to the lower insulating shell (120);
a first outer conductor (141), coupled to the third connecting portion (1332) of the third-polarity conductive terminal (133), having a first outer fixing portion (1411) and a first outer contact portion (1412), wherein the first outer fixing portion (1411) allows the first outer conductor (141) to be fixed to the lower insulating shell (120); and
a second outer conductor (142), coupled to the second connecting portion (1322) of the second-polarity conductive terminal (132), having a second outer fixing portion (1421) and a second outer contact portion (1422), wherein the second outer fixing portion (1421) allows the second outer conductor (142) to be fixed to the lower insulating shell (120);
wherein the first outer contact portion (1412) of the first outer conductor (141), the central contact portion (1402) of the central conductor (140) and the second outer contact portion (1422) of the second outer conductor (142) are sequentially arranged outside the lower insulating shell (120); and
a base (200), assembled with the electrical connector, the base (200) comprising:
a first insulating shell (210), provided with at least one socket (211);
a second insulating shell (220), arranged under the first insulating shell (210), and connected with the first insulating shell (210);
a central terminal (230), provided with a central docking portion (2301) and a central connecting portion (2302), wherein the central docking portion (2301) is disposed correspondingly to a socket (211) of the first insulating shell (210), and the central connecting portion (2302) allows the central terminal (230) to be fixed between the first insulating shell (210) and the second insulating shell (220);
a first outer ring terminal (231), provided with a first outer ring docking portion (2311) and a first outer ring connecting portion (2312), wherein the first outer ring docking portion (2311) is arranged correspondingly to a socket (211) of the first insulating shell (210), and the first outer ring connecting portion (2312) allows the first outer ring terminal (231) to be fixed between the first insulating shell (210) and the second insulating shell (220);
a first inner ring terminal (233), provided with a first inner ring docking portion (2331) and a first inner ring connecting portion (2332), wherein the first inner ring docking portion is arranged correspondingly to a socket (211) of the first insulating shell (210), and the first inner ring connecting portion (2332) allows the first inner ring terminal (233) to be fixed between the first insulating shell (210) and the second insulating shell (220);
a second outer ring terminal (232), provided with a second outer ring docking portion (2321) and a second outer ring connecting portion (2322), wherein the second outer ring docking portion (2321) is arranged correspondingly to a socket (211) of the first insulating shell (210), and the second outer ring connecting portion (2322) allows the second outer ring terminal (232) to be fixed between the first insulating shell (210) and the second insulating shell (220); and
a second inner ring terminal (234), provided with a second inner ring docking portion (2341) and a second inner ring connecting portion (2342), wherein the second inner ring docking portion (2341) is arranged correspondingly to a socket (211) of the first insulating shell (210), and the second inner ring connecting portion (2342) allows the second inner ring terminal (234) to be fixed between the first insulating shell (210) and the second insulating shell (220);
wherein the first outer ring docking portion (2311) of the first outer ring terminal (231) and the first inner ring docking portion (2331) of the first inner ring terminal (233) are disposed correspondingly to a same socket (211), and the second outer ring docking portion (2321) of the second outer ring terminal (232) and the second inner ring docking portion (2341) of the second inner ring terminal (234) are disposed correspondingly to a same socket (211).
